# EUROPEAN PATENT APPLICATION

(11) **EP 4 008 582 A1**
(43) Date of publication of application: **08.06.2022**
(21) Application number: 20211568.9
(22) Date of filing: 03.12.2020
(51) Int. Cl.: B60L 58/13, B60L 58/18, B60L 15/20

(54) **A METHOD FOR CONTROLLING A PROPULSION SYSTEM**

(71) Applicant: VOLVO TRUCK CORPORATION, 405 08 Göteborg (SE)
(72) Inventor: ÅSBOGÅRD, Mattias, 435 35 MÖLNLYCKE (SE)
(74) Representative: Kransell & Wennborg KB

(57) **Abstract**

The present disclosure relates to a method for controlling an electrically controlled propulsion system, the electrically controlled propulsion system comprises a first electric power system comprising a first electric machine configured to generate a propulsion torque, and a first electric power supply unit electrically connected to the first electric machine, a second electric power system comprising a second electric machine configured to generate a propulsion torque, and a second electric power supply unit electrically connected to the second electric machine, wherein the first and second electric machines are individually controllable, wherein the method comprises obtaining a signal indicative of a first current energy condition of the first electric power supply unit and second current energy condition of the second electric power supply unit; determining a difference between the first current energy condition and the second current energy condition; and controlling the first and second electric machines to reduce a difference between the first and second current energy conditions.

## Description

### TECHNICAL FIELD

The present disclosure relates to a method for controlling an electrically controlled propulsion system. The present disclosure also relates to a control unit adapted to control such electrically controlled propulsion system. Although the method and control unit will be described in relation to a heavy-duty vehicle in the form of a truck as well as in relation to a marine vessel, the method and control unit are applicable also for other vehicles using at least two electric machines for propulsion.

### BACKGROUND

The propulsion systems of vehicles and marine vessels are continuously developed to meet the demands from the market. A particular aspect relates to the emission of environmentally harmful exhaust gas. Therefore, electric machines have been increasingly popular, for cars and trucks, as well as for marine vessels such as boats and ships.

A conventional approach when using electric machines is to use two electric machines. For example, one of the electric machines can be arranged as a primary drive system while the other electric machine is arranged as a secondary drive system.

US 2010/133023 describes a method and apparatus for an all-electric vehicle. An energy transfer control module monitors the condition of each electrical system, such as monitoring the state-of charge of each system. Also, the energy transfer control module described in US 2010/133023 is configured to maintain one or both of the electrical system systems within a preferred state of charge range, i.e. between a lower state of charge and an upper state of charge.

Although US 2010/133023 present a solution for efficiently controlling a system using more than one electrical system for propulsion, it is still in need of further improvement, in particular regarding power utilization of the different systems.

### SUMMARY

It is an object of the present disclosure to describe a method which at least partially overcomes the above described deficiencies. This is achieved by a method according to claim 1.

According to a first aspect, there is provided a method for controlling an electrically controlled propulsion system, the electrically controlled propulsion system comprises a first electric power system comprising a first electric machine configured to generate a propulsion torque, and a first electric power supply unit electrically connected to the first electric machine, a second electric power system comprising a second electric machine configured to generate a propulsion torque, and a second electric power supply unit electrically connected to the second electric machine, wherein the first and second electric machines are individually controllable, wherein the method comprises obtaining a signal indicative of a first current energy condition of the first electric power supply unit and second current energy condition of the second electric power supply unit; determining a difference between the first current energy condition and the second current energy condition; and controlling the first and second electric machines to reduce a difference between the first and second current energy conditions.

The above described propulsion system should be construed as applicable to various types of propelling members. According to an example, and as will be described further below, the propelling member may be the wheels of a vehicle, preferably a truck, or an impeller or propeller of a marine vessel. Thus, the first and second electric machine can generate a torque to the wheels of such vehicle or to an impeller/propeller of the marine vessel. Also, operation of the first and second electric machines should be construed as applicable for propelling the propelling member, i.e. during acceleration, as well as during regeneration of electrical power, i.e. during deceleration. Also, one electric machine may be connected to one propelling member, while the second machine is connected to another propelling member. For example, the first and second electric machines may be connected to a respective first and second propeller.

Moreover, the step of obtaining the signal indicative of current energy consumption of the first and second power supply units may be executed by monitoring the current energy condition. Thus, a continuous monitoring of e.g. a state of charge (SOC) level of the power supply units may be executed by receiving a monitoring signal to e.g. a control unit or control system.

An advantage of the present disclosure is that a well-balanced electrical system is provided where the propulsion system continuously strives to maintain a substantially similar energy condition between the electric power supply units. Hereby, the risk of e.g. draining one of the electric power supply units is reduced, whereby an improved redundancy is achieved. In further detail, the above disclosure minimizes the risk that one electric power supply unit will have substantially full operational capacity, while the other has minimal operational capacity. This will in turn improve the flexibility of controlling the electric machines as both electric machine will be connected to an electric power supply unit with available electrical power, and an operator or control system can rely on fully operational electric machines.

According to an example embodiment, the first and second electric machines may be controlled to relatively increase operation of the electric machine connected to the electric power supply with the largest current energy condition.

The wording "largest current energy condition" should be construed as the electric power supply unit provided with most available electrical power for supply to its connected electric machine.

According to an example embodiment, the relative increase in operation is proportional to the difference between the first and second current energy conditions.

Thus, and as an example, the electric machines can be controlled by a ratio corresponding to a ratio of the difference between the current energy conditions of the first and second electric power supply units. In detail, if the energy condition of the first electric power supply unit is e.g. 20% higher compared to the energy condition of the second electric power supply unit, the first electric machine is controlled to generate a torque which is 20% higher compared to the torque generated by the second electric machine.

According to an example embodiment, the method may further comprise controlling operation of the first and second electric machines to reduce a difference between the first and second current power conditions when the difference is above a predetermined threshold limit. This allows the electric power supply units to be provided with a slightly different energy condition.

According to an example embodiment, the method may further comprise controlling operation of the first and second electric machines independently from each other when the difference is below, or equal to a predetermined threshold limit. Thus, when the energy condition of the electric power supply units is substantially the same, the electric machines can be individually controlled, i.e. not controlled based on the difference in current energy conditions.

According to an example embodiment, the first and second electric power systems may be connectable to a propelling member. According to an example embodiment, the propelling member may be a pair of propelled wheels of a vehicle. According to an example embodiment, the propelling member may on the other hand be an impeller or a propeller of a marine vessel.

According to an example embodiment, the first and second electric power systems may be connectable to a propelling member in parallel.

An advantage of connecting the electric power systems in parallel is that the redundancy of the electrically controlled propulsion system as one electric machine can generate a torque even in a case where the other electric machine fails to function properly.

As briefly mentioned above, and according to an example embodiment, the first and second electric machines may be controlled to generate a torque. According to an example embodiment, the first and second electric machines may be controlled by regenerative braking. Thus, the energy balance between the electric power supply units can be controlled during acceleration as well as during deceleration.

According to an example embodiment, the first and second current energy conditions may comprise a state of charge level of the first and second electric power supply units, respectively.

State of charge, SOC, is a parameter which is advantageous to monitor as it indicates the ability to supply electric current to the electric machine.

According to an example embodiment, the method may further comprise obtaining a signal indicative of a desired torque for operation of a propelling member; and controlling the first and second electric machines to jointly generate the desired torque. Hereby, the system is controlled to generate the desired torque, even when one electric machine supplies a lower torque compared to the other electric machine.

According to a second aspect, there is provided a control unit adapted to control an electrically controlled propulsion system, the electrically controlled propulsion system comprising a first electric power system comprising a first electric machine configured to generate a propulsion torque, and a first electric power supply unit electrically connected to the first electric machine, a second electric power system comprising a second electric machine configured to generate a propulsion torque, and a second electric power supply unit electrically connected to the second electric machine, wherein the first and second electric machines are individually controllable using the control unit, wherein the control unit is connectable to the first and second electric power systems and configured to receive a signal indicative of a first current energy condition of the first electric power supply unit and a second current energy condition of the second electric power supply unit; determine a difference between the first current energy condition and the second current energy condition; and form a control signal to control the first and second machine, the control signal representing instructions causing operation of the first and second electric machines to reduce the difference between the first and second current power conditions.

Effects and features of the second aspect are largely analogous to those described above in relation to the first aspect.

According to a third aspect, there is provided a computer readable medium carrying a computer program comprising program code means for performing the steps of any one of the above described embodiments in relation to the first aspect when the program means is run on a computer.

According to a fourth aspect, there is provided a computer program comprising program code means for performing the steps of any one of the above described embodiments in relation to the first aspect when the program is run on a computer.

According to a fifth aspect, there is provided an electrically controlled propulsion system comprising a first electric power system comprising a first electric machine configured to generate a propulsion torque, and a first electric power supply unit electrically connected to the first electric machine, a second electric power system comprising a second electric machine configured to generate a propulsion torque, and a second electric power supply unit electrically connected to the second electric machine, and a control unit connected to the first and second electric power systems, wherein the first and second electric machines are individually controllable using the control unit, wherein the control unit being configured to receive a signal indicative of a first current energy condition of the first electric power supply unit and a second current energy condition of the second electric power supply unit; determine a difference between the first current energy condition and the second current energy condition; and form a control signal to control the first and second machine, the control signal representing instructions causing operation of the first and second electric machines to reduce the difference between the first and second current power conditions.

Effects and features of the third, fourth and fifth aspects are largely analogous to those described above in relation to the first aspect.

Further features of, and advantages will become apparent when studying the appended claims and the following description. The skilled person will realize that different features may be combined to create embodiments other than those described in the following, without departing from the scope of the present disclosure.

### BRIEF DESCRIPTION OF THE DRAWINGS

The above, as well as additional objects, features and advantages, will be better understood through the following illustrative and non-limiting detailed description of exemplary embodiments, wherein:
Fig. 1a is a lateral side view illustrating a vehicle in the form of a truck suitably comprising an electrical controlled propulsion system according to an example embodiment;
Fig. 1b is a perspective view of a marine vessel suitably comprising an electrical controlled propulsion system according to an example embodiment;
Fig. 2 is a schematic illustration of the electrically controlled propulsion system according to an example embodiment; and
Fig. 3 is a flow chart of a method for controlling the electrically controlled propulsion system in Fig. 2.

### DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

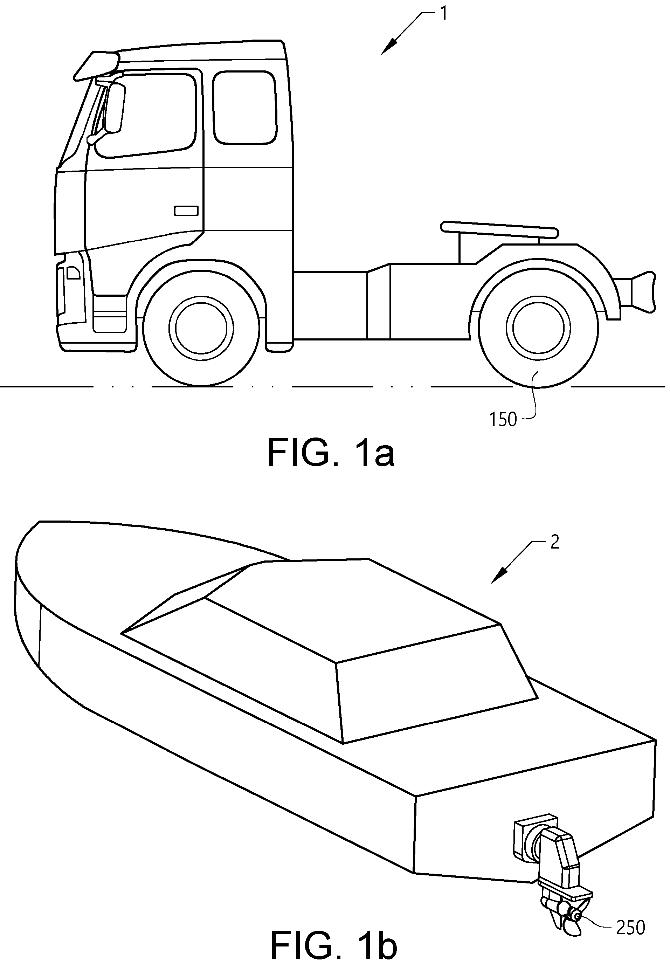

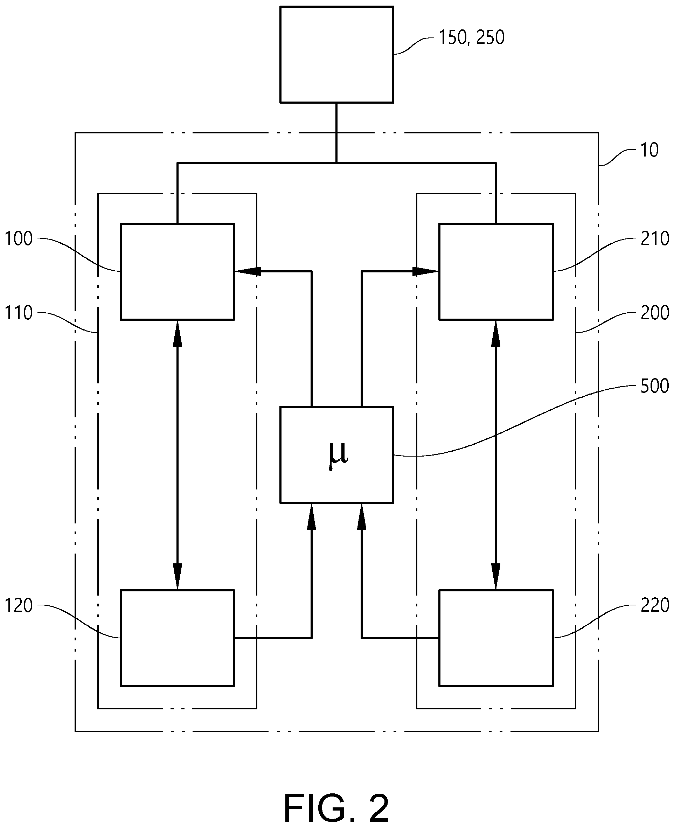

With particular reference to Fig. 1a, there is provided a vehicle 1 in the form of a truck. The vehicle 1 comprises propelling members 150 in the form of propelled wheels. Although Fig. 1a indicates that the rear pair of wheels are arranged as propelled wheels, the present disclosure is of course applicable for propelling the front pair of wheels instead, or both the front and rear pair of wheels. The vehicle 1 depicted in Fig. 1a is thus suitable for propelling the wheels using the electrically controlled propulsion system as will be described below with reference to Fig. 2.

Turning to Fig. 1b, which is a perspective view of a marine vessel 2 which can also be propelled by the below described electrically controlled propulsion system. The marine vessel 2 comprises a propelling member 250 in the form of a propeller or impeller.

In order to describe the electrically controlled propulsion system in further detail, reference is made to Fig. 2 which is a schematic illustration of the electrically controlled propulsion system according to an example embodiment.

As can be seen, the electrically controlled propulsion system 10 comprises a first 100 and a second 200 electric power system. The first electric power system 100 comprises a first electric machine 110 and a first electric power supply unit 120 connected to the first electric machine 110. The first electric machine 110 can be an electric motor configured to generate a torque, or an electric machine arranged as a motor as well as a generator. The first electric power supply unit is preferably an electric battery. Thus, the first electric machine 110 is configured to receive electric power from the first electric power supply unit 120 for generating a torque and/or to generate electric power which is supplied to the first electric power supply unit 120. The latter can be achieved by e.g. exposing the first electric machine 110 to regenerative braking.

Furthermore, the first electric machine 110 is connected to a propelling member 150, 250 for controlling operation thereof. As described above, the propelling member may be a pair of propelled wheels 150 of the vehicle 1 depicted in Fig. 1a, or a propeller/impeller 250 of the marine vessel depicted in Fig. 1b.

Furthermore, the second electric power system 200 comprises a second electric machine 210 and a second electric power supply unit 220 connected to the second electric machine 210. The second electric machine 210 can, in a similar manner as the first electric machine 110, be an electric motor configured to generate a torque, or an electric machine arranged as a motor as well as a generator. The second electric power supply unit is also preferably an electric battery. Thus, the second electric machine 210 is configured to receive electric power from the second electric power supply unit 220 for generating a torque and/or to generate electric power which is supplied to the second electric power supply unit 220. The latter can be achieved by e.g. exposing the second electric machine 210 to regenerative braking. As also illustrated in Fig. 2, the second electric machine 210 is connected to the propelling member 150, 250 for controlling operation thereof. The following will however only describe the functional operation with regards to generating torque to the propelling member 150, 250.

Accordingly, the first 110 and second 210 electric machines are connected to the propelling member 150, 250 in parallel. The first 110 and second 210 electric machines are thus arranged to control the propelling member 150, 250 independently from each other. In further detail, a torque can be generated to the propelling member 150, 250 by either one of the first 110 and second 210 electric machines, or the first 110 and second 210 electric machines can in conjunction generate a torque to the propelling member 150, 250.

Accordingly, and as an example, the first electric machine 110 can generate a first torque level to the propelling member 150, 250 at the same time as the second electric machine 210 generates a second torque level to the propelling member 150, 250, which second torque level is different from the first torque level.

Although Fig. 2 illustrates an electrically controlled propulsion system 10 comprising two electric power systems, the present disclosure is also applicable with the incorporation of even further number(s) of electric power system(s). For example, a third, or fourth, fifth, etc. electric power systems, i.e. n-number of electric power systems may be provided in parallel with the first 110 and second 210 electric power systems. In such a case, the third electric power system comprises a third electric machine and a third electric power supply unit in a similar manner as described above in relation to the first 110 and second 210 electric power systems.

As is further illustrated in Fig. 2, the electrically controlled propulsion system 100 also comprises a control unit 500. The control unit 500 may include a microprocessor, microcontroller, programmable digital signal processor or another programmable device. The control unit 500 may also, or instead, include an application specific integrated circuit, a programmable gate array or programmable array logic, a programmable logic device, or a digital signal processor. Where the control unit 500 includes a programmable device such as the microprocessor, microcontroller or programmable digital signal processor mentioned above, the processor may further include computer executable code that controls operation of the programmable device.

As can be seen, the control unit 500 is connected to the first 120 and second 220 electric power supply units. Hereby, the control unit 500 can continuously monitor the current energy condition of each electric power supply unit. The current energy condition may preferably be, and is also referred to as a current state of charge level of the first 120 and second 220 electric power supply units 120, 220.

Furthermore, the control unit 500 is also connected to the first 110 and second 210 electric machines. Hereby, the control unit 500 controls operation of the first 110 and second 210 electric machines by transmitting control signals thereto. In particular, the control unit 500 individually controls the first 110 and second 210 electric machines by transmitting instructions of torque levels for obtaining a desired overall torque level. Thus, although not depicted in Fig. 2, the control unit 500 is also, directly or indirectly, connected to an operation system arranged to determine a desired operating torque of the vehicle 1 or marine vessel 2. Such operation system may be arranged to receive a signal indicative of an accelerator pedal position of the vehicle 1 to determine a desired torque, or receive a signal from an autonomous control system of the vehicle 1 or marine vessel 2. Other alternatives for determining a desired torque level are also conceivable and well known to the skilled person.

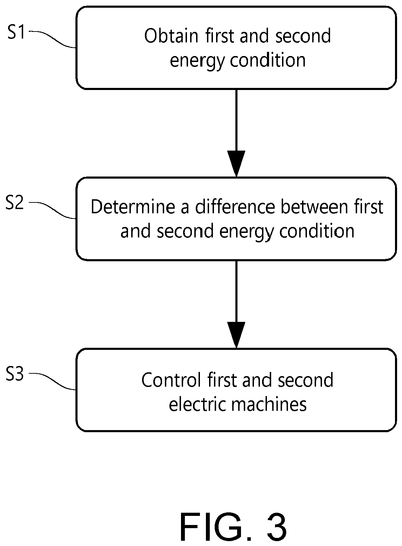

In order to describe the function operation in further detail, reference is made to Fig. 2 in combination with Fig. 3. During operation of the electrically controlled propulsion system 100, the control unit 500 obtains S1 a signal indicative of the first current energy condition, preferably a current state of charge level, of the first electric power supply unit 120, as well a second current energy condition, also preferably a current state of charge level, of the second electric power supply unit 220. The control unit 500 can here determine S2 a difference between the first current energy condition and the second current energy condition. The difference between the first current energy condition and the second current energy condition can be determined by continuously comparing the current energy conditions with each other.

The control unit 500 is, based on the difference between the first current energy condition and the second current energy condition, arranged to control S3 operation of the first 110 and second 210 electric machines for reducing the difference between current energy conditions. Thus, the operation of the first 110 and second 210 electric machines is controlled to balance the energy condition between the first 120 and second 220 power supply units.

In detail, and according to an example, when the current energy condition, e.g. the state of charge level, of the first electric power supply unit 120 is larger compared to the state of charge level of the second electric power supply unit 220, the control unit 500 controls the first 110 and second 210 electric machines in such a way that the first electric machine 110 generates a torque which is larger than the torque generated by the second electric machine 210. Hereby, the state of charge level of the first electric power supply unit 120 will be reduced and eventually be substantially the same as the state of charge level of the second electric power supply unit 220.

The increase of torque of the first electric machine 110 may be proportional to the difference between the state of charge levels. In such a case, and according to the above described example, the first 110 and second 210 electric machines jointly generate a torque to the propelling member 150, 250, but the torque level of the first electric machine is increased, compared to the torque level of the second electric machine 210, with a ratio similar to the ratio of the difference in state of charge levels.

When the difference in state of charge level is equal to, or below a predetermined threshold limit, i.e. when the electric power supply units are substantially balanced, the first 110 and second 210 electric machines can be controlled independently of each other. However, the control unit 500 will continue to monitor the state of charge levels and control operation of the first 110 and second 210 electric machines as described above when the difference is above the threshold limit.

As a further alternative, the control unit 500 may also control the first and second electric machines based on the overall operation of the vehicle/marine vessel. In detail, the control unit 500 may, as an input parameter for controlling the electric machines, determine how the distribution of torque between the first and second electric machines affects the operational dynamics of the vehicle/marine vessel. Thus, the distribution of torque between the first and second electric machines can also be based on the operational dynamics, in order to provide an acceptable operation of the vehicle/marine vessel. The operation dynamics should preferably fulfil at least one predetermined criteria, such as e.g. the ability to operate the vehicle/marine vessel in a desired direction.

It is to be understood that the present disclosure is not limited to the embodiments described above and illustrated in the drawings; rather, the skilled person will recognize that many changes and modifications may be made within the scope of the appended claims. For example, the various dimensions of the fastening element described above can be of course be varied to fit the opening of the mechanical parts it is to retain. The dimensions should also include material- and production tolerances.

## Claims

1. A method for controlling an electrically controlled propulsion system (10), the electrically controlled propulsion system comprises a first electric power system (100) comprising a first electric machine (110) configured to generate a propulsion torque, and a first electric power supply unit (120) electrically connected to the first electric machine (110), a second electric power system (200) comprising a second electric machine (210) configured to generate a propulsion torque, and a second electric power supply unit (220) electrically connected to the second electric machine (210), wherein the first and second electric machines are individually controllable, wherein the method comprises:
- obtaining (S1) a signal indicative of a first current energy condition of the first electric power supply unit (120) and second current energy condition of the second electric power supply unit (220);
- determining (S2) a difference between the first current energy condition and the second current energy condition; and
- controlling (S3) the first (110) and second (210) electric machines to reduce a difference between the first and second current energy conditions.

2. The method according to claim 1, wherein the first and second electric machines are controlled to relatively increase operation of the electric machine connected to the electric power supply with the largest current energy condition.

3. The method according to claim 2, wherein the relative increase in operation is proportional to the difference between the first and second current energy condition.

4. The method according to any one of the preceding claims, further comprising
- controlling operation of the first (110) and second (210) electric machines independently from each other when the difference is below, or equal to a predetermined threshold limit.

5. The method according to any one of the preceding claims, wherein the first (100) and second (200) electric power systems are connectable to a propelling member (400).

6. The method according to claim 5, wherein the first (100) and second (200) electric power systems are connectable to a propelling member (400) in parallel.

7. The method according to any one of claims 5 or 6, wherein the propelling member (400) is a pair of propelled wheels of a vehicle.

8. The method according to any one of claims 5 or 6, wherein the propelling member (400) is an impeller or a propeller of a marine vessel.

9. The method according to any one of the preceding claims, wherein the first (110) and second (210) electric machines are controlled to generate a torque.

10. The method according to any one of the preceding claims, wherein the first (110) and second (210) electric machines are controlled by regenerative braking.

11. The method according to any one of the preceding claims, wherein the first and second current energy conditions comprise a state of charge level of the first (120) and second (220) electric power supply units, respectively.

12. The method according to any one of the preceding claims, further comprising:
- obtaining a signal indicative of a desired torque for operation of a propelling member (400); and
- controlling the first (110) and second (210) electric machines to jointly generate the desired torque.

13. A control unit adapted to control an electrically controlled propulsion system (10), the electrically controlled propulsion system (10) comprising a first electric power system (100) comprising a first electric machine (110) configured to generate a propulsion torque, and a first electric power supply unit (120) electrically connected to the first electric machine (110), a second electric power system (200) comprising a second electric machine (210) configured to generate a propulsion torque, and a second electric power supply unit (220) electrically connected to the second electric machine (210), wherein the first (110) and second (210) electric machines are individually controllable using the control unit, wherein the control unit (500) is connectable to the first (100) and second (200) electric power systems and configured to:
- receive a signal indicative of a first current energy condition of the first electric power supply unit (120) and a second current energy condition of the second electric power supply unit (220);
- determine a difference between the first current energy condition and the second current energy condition; and
- form a control signal to control the first and second machine, the control signal representing instructions causing operation of the first (110) and second (210) electric machines to reduce the difference between the first and second current power conditions.

14. A computer readable medium carrying a computer program comprising program code means for performing the steps of claims 1 - 12 when the program means is run on a computer.

15. A computer program comprising program code means for performing the steps of claims 1 - 12 when the program is run on a computer.

16. An electrically controlled propulsion system (10) comprising a first electric power system (100) comprising a first electric machine (110) configured to generate a propulsion torque, and a first electric power supply unit (120) electrically connected to the first electric machine (110), a second electric power system (200) comprising a second electric machine (210) configured to generate a propulsion torque, and a second electric power supply unit (220) electrically connected to the second electric machine (210), and a control unit (500) connected to the first (100) and second (200) electric power systems, wherein the first (110) and second (210) electric machines are individually controllable using the control unit, wherein the control unit being configured to:
- receive a signal indicative of a first current energy condition of the first electric power supply unit (120) and a second current energy condition of the second electric power supply unit (220);
- determine a difference between the first current energy condition and the second current energy condition; and
- form a control signal to control the first and second machine, the control signal representing instructions causing operation of the first (110) and second (210) electric machines to reduce the difference between the first and second current power conditions.
